# FASCICULE DE BREVET EUROPEEN

(11) **EP 0 560 673 B1**
(45) Date de publication et mention de la délivrance du brevet: **11.06.1997**
(21) Numéro de dépôt: 93400609.9
(22) Date de dépôt: 10.03.1993
(51) Int. Cl.: B60H 1/24

(54) **Dispositif de ventilation naturelle de l'habitacle d'un vehicule, notamment automobile**
Natürliche Belüftungseinrichtung des Innenraums eines Fahrzeuges, insbesondere eines Kraftfahrzeuges
Natural ventilating device for the interior of a vehicle, especially a motor vehicle

(30) Priorité: 10.03.1992 FR 9202839
(43) Date de publication de la demande: 15.09.1993
(73) Titulaire: IMRA EUROPE S.A., F-06560 Valbonne (FR)
(72) Inventeur: Bezian, Jean-Jacques, Villa Raphel, F-06600 Antibes (FR); Gschwind, Michel, F-06560 Valbonne (FR); Fonzes, Georges, F-06600 Antibes (FR)
(74) Mandataire: Leszczynski, André

(56) Documents cités:
- DE-U- 1 841 282
- FR-A- 1 464 149
- US-A- 2 633 377
- US-A- 2 972 939
- PATENT ABSTRACTS OF JAPAN vol. 6, no. 97 (M-134)(975) 5 Juin 1982 & JP-A-57 033 012 (DIESEL-KIKI) 23 Février 1982
- PATENT ABSTRACTS OF JAPAN vol. 8, no. 112 (M-298)(1549) 25 Mai 1984 & JP-A-59 020 718 (NISSAN) 2 Février 1984
- PATENTS ABSTRACTS OF JAPAN vol. 4, no. 161 (M-40)(643) 11 Novembre 1980 & JP-A-55 110 613 (TOSHIAKI ENOMOTO) 26 Août 1980

## Description

La présente invention a pour objet un dispositif de ventilation naturelle de l'habitacle d'un véhicule, notamment automobile.

L'habitacle d'un véhicule automobile, délimite un espace relativement petit dont une bonne ventilation participe à l'amélioration du confort des passagers.

On connaît des dispositifs de ventilation dans lesquels des collecteurs d'air, situés à l'extérieur du véhicule, utilisent l'effet de vent résultant du déplacement du véhicule pour envoyer de l'air dans son habitacle.

Cependant, de tels dispositifs ne conviennent pas pour un véhicule à l'arrêt lorsqu'il est exposé aux rayons du soleil, surtout compte-tenu de la grande surface vitrée des voitures actuelles, dans lesquelles il se produit un effet de serre pouvant faire monter la température dans l'habitacle jusqu'à 70°C et plus.

Il apparaît donc indispensable d'abaisser la température dans l'habitacle. Dans ce but, il est connu d'utiliser un climatiseur, mais étant donné qu'il n'entre en action qu'au moment où le conducteur met en marche le moteur, le climatiseur doit être d'une grande puissance pour être susceptible d'abaisser rapidement la température de plusieurs dizaines de degrés.

De tels climatiseurs sont d'un prix de revient élevé et sont en outre grands consommateurs d'énergie.

Afin de réduire la charge technique du climatiseur et d'améliorer le confort à l'intérieur de l'habitacle au moment du démarrage on a également imaginé d'utiliser, à l'arrêt du véhicule, un dispositif de ventilation forcée de l'habitacle au travers d'un toit ouvrant. L'air intérieur est alors aspiré par un ventilateur électrique situé dans l'ouverture du toit ouvrant.

Une alimentation électrique est requise dans ce cas, cette alimentation étant constituée pour préserver la batterie par des cellules photovoltaïques. Toutefois, le coût d'un tel dispositif s'en trouve substantiellement accru sans pour autant que le résultat obtenu ne soit pleinement satisfaisant.

On connaît par JP-A-57-33012 un dispositif de ventilation naturelle de l'habitacle d'un véhicule automobile comportant au moins un passage d'air entre le dessous et l'habitacle du véhicule

On connaît par ailleurs par US-A-2 972 939 un dispositif de ventilation naturelle de l'habitacle d'un véhicule automobile comportant au moins un passage d'air entre l'habitacle et le dessus du véhicule.

La présente invention a pour objet un dispositif simple et économique de ventilation de l'habitacle d'un véhicule automobile qui n'utilise aucune source d'énergie et dont l'efficacité sur le confort est en outre au moins égale à celle des dispositifs connus.

La présente invention a pour objet un dispositif de ventilation naturelle de l'habitacle d'un véhicule, notamment automobile, comportant au moins un premier passage d'air entre le dessous et l'habitacle du véhicule et au moins un second passage d'air entre l'habitacle et le dessus du véhicule, caractérisé par le fait que ledit second passage d'air est situé entre le plafond de l'habitacle et le toit du véhicule, et que le premier passage d'air débouche dans ledit circuit d'aération.

On comprend que, grâce au dispositif objet de l'invention, l'habitacle du véhicule se ventile naturellement par un effet de cheminée qui renouvelle l'air compris dans l'habitacle avec un débit élevé pouvant atteindre 60 m3/h et plus dans des conditions d'usage habituel d'un véhicule. Cette ventilation permet de réduire, sans apport d'énergie extérieure, la température à l'intérieur de l'habitacle, en abaissant généralement de l'ordre de 40 %, l'énergie thermique accumulée dans l'habitacle.

Selon l'invention, la dimension, la position et la forme des différents passages d'air permettent d'ajuster et d'optimiser la vitesse de renouvellement de l'air compris dans l'habitacle, en fonction du type de véhicule.

De préférence, les différentes prises d'air et sorties d'air réalisées sur le véhicule peuvent être fermées par des moyens obturateurs commandés à distance.

Cette commande à distance peut être automatique, réalisant l'ouverture de certains passages ou leur fermeture en fonction par exemple de la position de la clé de contact du véhicule, et/ou des conditions climatiques extérieures et/ou intérieures.

Ces obturateurs peuvent également être commandés par le conducteur, de façon à lui permettre de choisir le mode de ventilation le plus adapté aux conditions de stationnement.

La quasi totalité des véhicules comportent aujourd'hui un circuit d'aération, de sorte que la présente invention peut être facilement mise en oeuvre sur un modèle de véhicule existant sans nécessiter de transformation notable de celui-ci, en particulier sans affecter son architecture ni son aspect.

Elle présente l'avantage de permettre de choisir la grille d'aération par laquelle l'air pris sous le véhicule débouche dans l'habitacle. En général, trois types de grilles sont connus qui sont usuellement désignés par les termes "dégivrage pare-brise", "têtes" et "pieds". Il est avantageux selon l'invention d'utiliser les grilles "têtes".

Selon un mode de réalisation de l'invention, il est avantageux de raccorder le premier passage d'air à la fois en amont et en aval d'un ventilateur du circuit d'aération, des moyens obturateurs permettant d'envoyer l'air vers les grilles du circuit d'aération, soit directement soit à travers ce ventilateur.

Ainsi, il est possible de forcer par intermittence l'arrivée d'air dans l'habitacle, en aspirant l'air pris sous le véhicule et ainsi d'amorcer et de favoriser l'effet de cheminée. A cette fin, les moyens obturateurs imposent à l'air de traverser le ventilateur, lequel a été préalablement mis en route.

Selon l'invention, ledit second passage d'air est situé en partie supérieure de l'habitacle.

Ainsi, l'air chaud accumulé en partie supérieure de l'habitacle s'évacue et est remplacé par de l'air frais issu du premier passage d'air.

A son tour, cet air frais, réchauffé par les parois de l'habitacle soumises aux rayons solaires s'élève et se transforme en air chaud qui est à nouveau évacué par le deuxième passage d'air.

Conformément à un mode de réalisation de l'invention, ledit second passage d'air est situé au-dessus de la vitre arrière du véhicule.

Selon une variante de ce mode de réalisation, le second passage d'air débouche à l'extérieur, au-dessus de la vitre arrière, par au moins une fente qui peut s'étendre sur toute la largeur de la vitre.

Avantageusement, cette fente est dissimulée par un aileron disposé par exemple au-dessus d'elle.

Un tel aileron permet à la fois d'obtenir un résultat esthétique et de tirer parti des mouvements d'air autour du véhicule.

Selon un autre mode de réalisation de l'invention, ledit second passage d'air est situé au bord du toit au-dessus des portières du véhicule.

En réalisant une ouverture au-dessus de chaque portière, on assure un renouvellement de l'air au voisinage de chaque place du véhicule, garantissant de cette manière un plus grand confort à chaque passager.

Chaque ouverture sur l'extérieur est conformée, de préférence, en forme de tuyère pour limiter les pertes de charge et profiter au maximum des pressions liées à l'effet de cheminée et comporte de préférence une grille protectrice et filtrante, empêchant par exemple l'introduction de corps tels que des feuilles qui pourraient obstruer le passage d'air et ainsi diminuer l'efficacité du dispositif. Ces grilles sont également conformées pour favoriser les écoulements d'air qui les traversent.

Dans le but de mieux faire comprendre l'invention, on va en décrire maintenant plusieurs modes de réalisation donnés à titre d'exemples et sans aucun caractère limitatif en référence au dessin schématique annexé dans lequel :
- la figure 1 représente un premier mode de réalisation de l'invention,
- la figure 2 représente un deuxième mode de réalisation de l'invention,
- la figure 3 représente un troisième mode de réalisation de l'invention,
- la figure 4 représente un quatrième mode de réalisation de l'invention,
- la figure 5 représente le premier passage d'air schématiquement représenté à la figure 2,
- la figure 6 représente le second passage d'air schématiquement représenté sur la figure 4, et
- la figure 7 représente un cinquième mode de réalisation de l'invention.

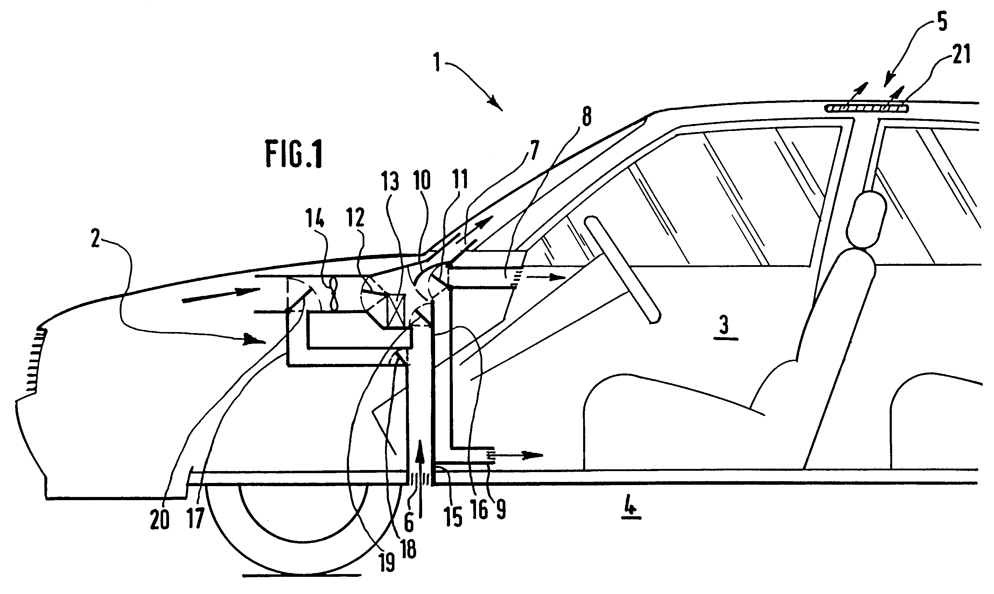

Sur la figure 1, une voiture 1, équipée du dispositif selon un premier mode de réalisation de l'invention, comporte un premier passage d'air 2 entre l'habitacle 3 et le dessous du véhicule 4 et un second passage d'air 5 situé au voisinage du toit du véhicule 1, entre l'habitacle 3 et l'extérieur.

L'air frais issu du dessous 4 du véhicule 1 entre par une grille 6 dans le premier passage d'air 2 et débouche dans l'habitacle 3 du véhicule 1 par les grilles d'aération "dégivrage pare-brise" 7, "têtes" 8 et "pieds" 9.

Des clapets disposés à l'intérieur du circuit d'aération permettent de choisir le mode d'aération à la convenance des passagers.

Un premier clapet 10 permet d'obturer la sortie "dégivrage pare-brise" 7, un second clapet 11 permet d'orienter soit sur les grilles "têtes" 8, soit sur les grilles "pieds" 9.

Un clapet 12 permet d'orienter l'air provenant de l'extérieur sur un radiateur 13 utilisé pour le chauffage de l'habitacle 3, si les conditions météorologiques le justifient. Ce radiateur 13, qui fait partie intégrante du circuit d'aération traditionnel du véhicule 1, n'est d'aucune utilité dans le cas présent et le clapet 12 est considéré comme étant en position basse.

Bien entendu, la configuration de clapets du circuit d'aération illustré n'a aucun caractère limitatif.

Le circuit d'aération comporte également un ventilateur 14 qui permet d'augmenter le débit d'air, principalement lorsque le véhicule 1 est en fonctionnement.

Le premier passage d'air 2 est constitué par un premier conduit 15 qui se divise en deux branches 16 et 17 dont l'une 17 débouche directement en amont du ventilateur 14 et l'autre 16 débouche en aval de ce ventilateur 14.

Des clapets 18 et 19 permettent de fermer le passage d'air, par exemple lorsque le véhicule roule.

Ces clapets 18 et 19 peuvent être avantageusement actionnés par un câble ou un micro-moteur, non représentés, qui est commandé soit directement par le conducteur soit automatiquement par un dispositif qui tient compte de différents paramètres tels que le déplacement du véhicule, et/ou les conditions climatiques.

Ces clapets 18 et 19 permettent de choisir la branche 16 ou 17 du conduit 15 par laquelle l'air débouche dans le circuit d'aération.

En fermant le clapet 18 et en ouvrant le clapet 19, on permet l'arrivée d'air directement dans le circuit d'aération ; le dispositif fonctionne alors en mode de ventilation naturelle.

En ouvrant le clapet 18 et en fermant le clapet 19 et en actionnant le ventilateur 14, on peut forcer l'introduction d'air extérieur de manière à amorcer l'effet de cheminée.

Le clapet 20 en amont du ventilateur qui existe d'origine sur la plupart des véhicules sera de préférence placé en position interdisant l'entrée d'air par un collecteur d'air traditionnel du circuit d'aération, pendant le fonctionnement du dispositif de ventilation naturelle.

Avantageusement, la position des clapets 18, 19 et 20 et la mise en route du ventilateur 14 sont synchronisées de manière à assurer un fonctionnement optimal du dispositif.

Sur cette figure 1, on a également représenté la grille externe 21 d'un second passage d'air 5, qui est situé au bord du toit, entre les portières avant et arrière du véhicule.

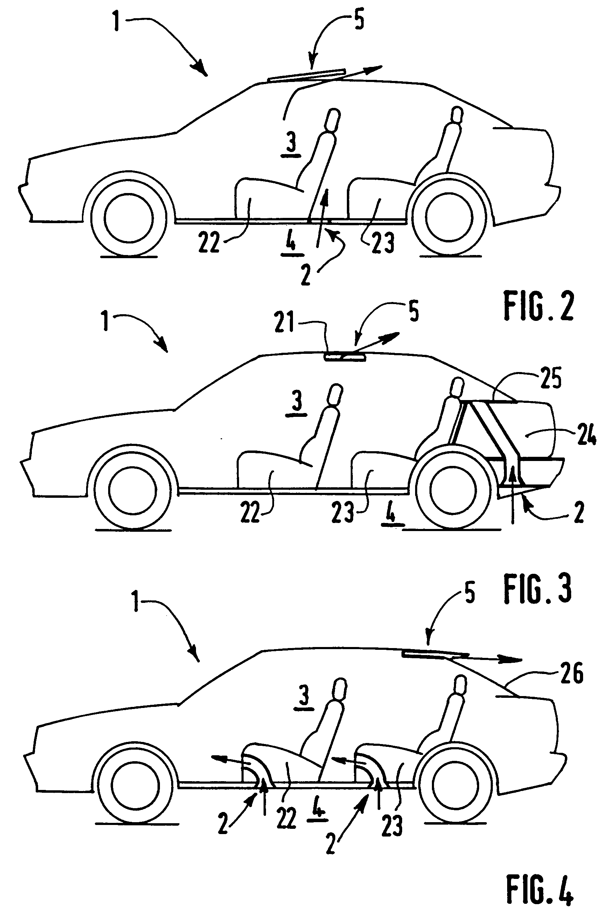

Sur la figure 2, on a schématisé un véhicule 1 sur lequel est installé un premier passage d'air 2, situé entre les sièges avant 22 et arrière 23 du véhicule, un toit ouvrant constitue le deuxième passage d'air 5. En variante, le premier passage d'air peut être situé au niveau des sièges avant 22 entre ceux-ci.

En effet, les véhicules munis d'un toit ouvrant ne nécessitent pas l'installation d'un second passage d'air spécifique entre l'habitacle 3 et l'extérieur. Il n'est cependant pas exclu, même dans ce cas, de réaliser un second passage d'air spécifique, tel que représenté par exemple sur la figure 1, de manière à limiter les risques de cambriolage que peut présenter un toit ouvrant entrouvert, s'il ne comporte des moyens anti-effraction particuliers.

La figure 3 représente un troisième mode de réalisation de l'invention dans lequel le premier passage d'air 2 débouche à l'extérieur sous le coffre 24 de la voiture 1 et dans l'habitacle 3 au niveau de la plage arrière 25, le second passage d'air 5 étant constitué par une grille 21 comme dans le mode de réalisation représenté sur la figure 1. Bien entendu, le passage d'air 2 doit être disposé suffisamment loin du circuit d'échappement du véhicule pour ne pas être affecté par les nuisances associées.

La figure 4 représente un quatrième mode de réalisation de l'invention dans lequel deux premiers passages d'air 2 traversent les sièges 22, 23 du véhicule 1 pour déboucher à hauteur des jambes des passagers avant et arrière.

Dans une variante non représentée, un unique premier passage d'air est situé entre les deux sièges avant du véhicule et traverse le plancher de l'habitacle à la manière des passages d'air 2.

Le second passage d'air 5 est situé au-dessus de la vitre arrière 26.

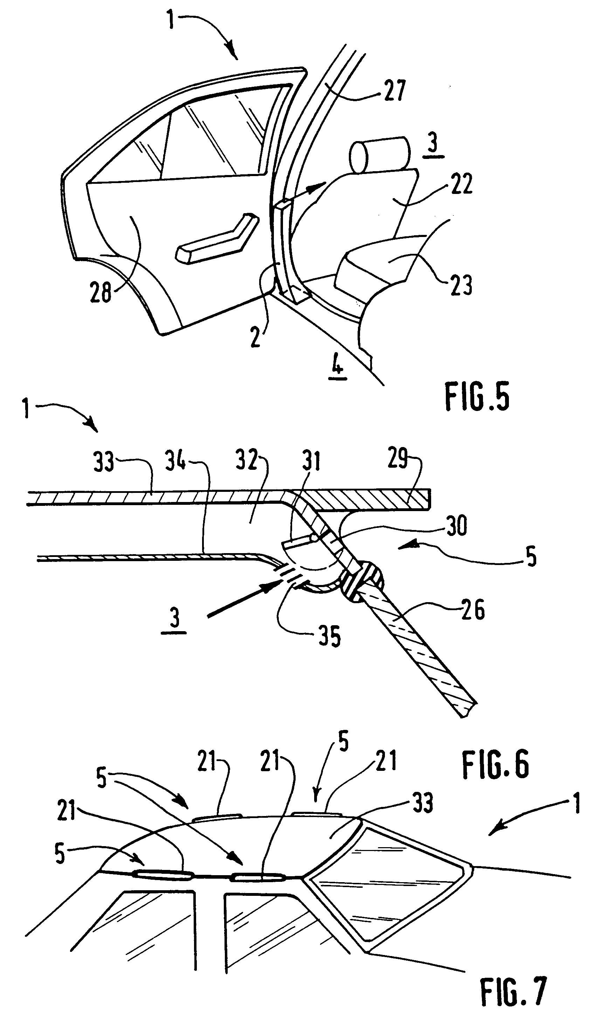

Sur la figure 5, le premier passage d'air 2, schématiquement représenté sur la figure 2, est réalisé dans un montant 27 d'une portière avant ou arrière 28. L'air entre par le dessous 4 du véhicule 1 et débouche dans l'habitacle 3 comme indiqué par la flèche.

Bien entendu, un premier passage d'air du même type peut être installé dans le montant de l'ensemble des portières du véhicule.

La figure 6 représente le second passage d'air 5 schématiquement représenté sur la figure 4. Un aileron 29 dissimule une fente 30 munie d'un clapet 31. Cette fente 30 fait communiquer l'extérieur avec une cavité 32 comprise entre le toit ou pavillon 33 de la voiture 1 et le plafond 34 de l'habitacle 3, une grille 35 permettant le passage de l'air entre l'habitacle 3 et cette cavité 32. La communication entre l'habitacle 3 et la cavité 32 peut être réalisée en tout point de la surface du plafond et de préférence à l'aplomb des sièges du véhicule.

Avantageusement, le clapet 31 est commandé à distance par exemple par un câble ou un moteur non représentés.

Enfin, la figure 7 représente la partie supérieure d'une voiture 1 dans laquelle des grilles externes 21 de quatre seconds passages d'air 5 sont situées au voisinage du toit 33 au-dessus de chacune des quatre portières de la voiture 1.

Il est bien entendu que les modes de réalisation qui viennent d'être décrits ne présentent aucun caractère limitatif et qu'ils pourront recevoir toutes modifications désirables sans sortir pour cela du cadre de l'invention.

En particulier, l'invention n'est pas limitée à la ventilation d'une voiture du type représenté sur le dessin mais concerne également la ventilation de tout autre type de véhicule automobile, y compris utilitaire ou de transport en commun, qui comporte un habitacle fermé. L'invention peut être également mise en oeuvre avec des véhicules ferroviaires.

## Revendications

1. Dispositif de ventilation naturelle de l'habitacle d'un véhicule, notamment automobile, muni d'un circuit d'aération qui débouche dans l'habitacle, comportant au moins un premier passage d'air (2) entre le dessous (4) et l'habitacle (3) du véhicule (1) et au moins un second passage d'air (5) entre l'habitacle (3) et le dessus du véhicule (1), caractérisé par le fait que ledit premier passage d'air (2) débouche dans ledit circuit d'aération (7,14) et que ledit second passage d'air (5) est situé entre le plafond de l'habitacle (3) et le toit du véhicule (1).

2. Dispositif selon la revendication 1, caractérisé par le fait que ledit premier passage d'air (2) débouche dans le circuit d'aération (7,14) du véhicule (1) à la fois en amont et en aval d'un ventilateur (14), des moyens obturateurs (18,19) permettant d'envoyer l'air vers des grilles (7,8,9) du circuit d'aération (7,14) soit directement, soit à travers le ventilateur (14).

3. Dispositif selon l'une quelconque des revendications précédentes, caractérisé par le fait que ledit second passage d'air (5) est situé au-dessus de la vitre arrière (26) du véhicule (1).

4. Dispositif selon la revendication 3, caractérisé par le fait que ledit second passage d'air (5) débouche à l'extérieur par au moins une fente (30).

5. Dispositif selon la revendication 4, caractérisé par le fait que ladite fente (30) est dissimulée par un aileron (29).

6. Dispositif selon l'une quelconque des revendications 4 et 5, caractérisé par le fait que ladite fente (30) communique avec une cavité (32) ménagée entre le toit (33) et le plafond (34) du véhicule (1), ladite cavité (32) communiquant avec l'intérieur de l'habitacle (3).

7. Dispositif selon l'une quelconque des revendications 1 et 2, caractérisé par le fait que ledit second passage d'air (5) est situé au bord du toit (33) au-dessus des portières (28).

8. Dispositif selon l'une quelconque des revendications précédentes, caractérisé par le fait qu'au moins une ouverture sur l'extérieur des passages d'air est protégée par une grille (6,21).

9. Dispositif selon l'une quelconque des revendications précédentes, caractérisé par le fait qu'au moins un passage d'air (2,5) comporte des moyens obturateurs (18,19,31) commandés à distance.

## Claims

1. Device for natural ventilation of the interior of a vehicle, especially a motor vehicle, equipped with an air-vent circuit which opens into the interior, including at least one first air passage (2) between the underside (4) and the interior (3) of the vehicle (1) and at least one second air passage (5) between the interior (3) and the top of the vehicle (1), characterized in that the said first air passage (2) opens into the said air-vent circuit (7, 14) and that the said second air passage (5) is situated between the ceiling of the interior (3) and the roof of the vehicle (1).

2. Device according to Claim 1, characterized in that the said first air passage (2) opens into the airvent circuit (7, 14) of the vehicle (1) both upstream and downstream of a blower (14), shutter means (18, 19) allowing the air to be sent towards vents (7, 8, 9) of the air-vent circuit (7, 14) either directly or through the blower (14).

3. Device according to either one of the preceding claims, characterized in that the said second air passage (5) is situated above the rear screen (26) of the vehicle (1).

4. Device according to Claim 3, characterized in that the said second air passage (5) opens to the outside via at least one slit (30).

5. Device according to Claim 4, characterized in that the said slit (30) is concealed by a wing (29).

6. Device according to either one of Claims 4 and 5, characterized in that the said slit (30) communicates with a cavity (32) formed between the roof (33) and the ceiling (34) of the vehicle (1), the said cavity (32) communicating with the inside of the interior (3).

7. Device according to either one of Claims 1 and 2, characterized in that the said second air passage (5) is situated at the edge of the roof (33) above the doors (28).

8. Device according to any one of the preceding claims, characterized in that at least one of the air-passage openings to the outside is protected by a grille (6, 21).

9. Device according to any one of the preceding claims, characterized in that at least one air passage (2, 5) includes remote-controlled shutter means (18, 19, 31).

## Patentansprüche

1. Vorrichtung zur natürlichen Belüftung der Kabine eines Fahrzeugs, insbesondere eines Kraftfahrzeugs, das mit einem Belüftungsumlauf versehen ist, der in die Kabine hinein einmündet, mit mindestens einem ersten Luftkanal (2) zwischen der Unterseite (4) und der Kabine (3) des Fahrzeugs (1) und mindestens einem zweiten Luftkanal (5) zwischen der Kabine (3) und der Oberseite des Fahrzeugs (1), dadurch gekennzeichnet, daß der genannte erste Luftkanal (2) in den genannten Belüftungsumlauf (7, 14) einmündet, und daß der genannte zweite Luftkanal (5) zwischen der Decke der Kabine (3) und dem Dach des Fahrzeugs (1) gelegen ist.

2. Vorrichtung nach Anspruch 1, dadurch gekennzeichnet, daß der genannte erste Luftkanal (2) in den Belüftungsumlauf (7, 14) des Fahrzeugs (1) gleichzeitig stromaufwärts und stromabwärts von einem Ventilator (14) einmündet, wobei Verschlußeinrichtungen (18, 19) es gestatten, Luft entweder unmittelbar oder über den Ventilator (14) hinweg zu den Gittern (7, 8, 9) des Belüftungsumlaufs (7, 14) zu senden.

3. Vorrichtung nach irgendeinem der vorausgehenden Ansprüche, dadurch gekennzeichnet, daß der zweite Luftkanal (5) über der Rückfensterscheibe (26) des Fahrzeugs (1) gelegen ist.

4. Vorrichtung nach Anspruch 3, dadurch gekennzeichnet, daß der genannte zweite Luftkanal (5) durch mindestens einen Schlitz (30) nach außen mündet.

5. Vorrichtung nach Anspruch 4, dadurch gekennzeichnet, daß der genannte Schlitz (30) durch eine Flosse (29) verborgen ist.

6. Vorrichtung nach irgendeinem der Ansprüche 4 und 5, dadurch gekennzeichnet, daß der genannte Schlitz (30) mit einem Hohlraum (32) in Verbindung steht, der zwischen dem Dach (33) und der Decke (34) des Fahrzeugs (1) eingebracht ist, wobei der genannte Hohlraum (32) mit der Innenseite der Kabine (3) in Verbindung steht.

7. Vorrichtung nach irgendeinem der Ansprüche 1 und 2, dadurch gekennzeichnet, daß der genannte zweite Luftkanal (5) am Rand des Daches (33) über den Türen (28) gelegen ist.

8. Vorrichtung nach irgendeinem der vorausgehenden Ansprüche, dadurch gekennzeichnet, daß mindestens eine Öffnung auf der Außenseite der Luftkanäle durch ein Gitter (6, 21) geschützt ist.

9. Vorrichtung nach irgendeinem der vorausgehenden Ansprüche, dadurch gekennzeichnet, daß mindestens ein Luftkanal (2, 5) ferngesteuerte Verschlußmittel (18, 19, 31) aufweist.
